# EUROPEAN PATENT APPLICATION

(11) **EP 4 782 202 A1**
(43) Date of publication of application: **29.07.2026**
(21) Application number: 26153629.6
(22) Date of filing: 22.01.2026
(51) Int. Cl.: B32B 5/26, D04H 1/4274, D04H 1/58, D04H 1/732

(54) **METHOD OF MANUFACTURING FABRIC FOR CLOTHES AND FABRIC FOR CLOTHES**

(30) Priority: 24.01.2025 JP 2025010396
(71) Applicant: Seiko Epson Corporation, Tokyo 160-8801 (JP)
(72) Inventor: SHIMIZU, Sho, Suwa-shi, 392-8502 (JP); KOIKE, Emiri, Suwa-shi, 392-8502 (JP); MIYAJIMA, Yoshitaka, Suwa-shi, 392-8502 (JP)
(74) Representative: Lewis Silkin LLP

(57) **Abstract**

A method of manufacturing a fabric for clothes includes: a defibrating step of defibrating a raw material in a dry condition to produce fibers; a mixing step of mixing a treatment agent having elasticity with the fibers obtained in the defibrating step to produce a mixture; a depositing step of depositing the mixture in air on a fabric to be a first layer having air permeability and elasticity to produce a web to be a second layer; and a forming step of forming the laminated fabric and web by heating and pressurizing.

## Description

The present application is based on, and claims priority from JP Application Serial Number 2025-010396, filed January 24, 2025, the disclosure of which is hereby incorporated by reference herein in its entirety.

### BACKGROUND

### 1. Technical Field

The present disclosure relates to a method of manufacturing a fabric for clothes and a fabric for clothes.

### 2. Related Art

In recent years, in order to cope with problems such as depletion of resources and an increase of waste, techniques for reusing used clothes and the like have been studied. For example, JP-A-2023-111178 discloses a method of manufacturing a fiber sheet by defibrating a fabric in a dry condition.

JP-A-2023-111178 is an example of the related art.

However, the manufacturing method described in JP-A-2023-111178 has a problem that it is difficult to improve the elasticity of the fiber sheet. Specifically, when the fiber sheet is used for clothes, relatively high elasticity is required. The fiber sheet is based on reuse of unspecified materials such as offcuts and old clothes. Therefore, it is difficult to improve the elasticity of the fiber sheet, and there is a concern that the use as a fabric for clothes is limited. That is, there has been a demand for a method of manufacturing a fabric for clothes that improves elasticity.

### SUMMARY

A method of manufacturing a fabric for clothes includes: defibrating a fabric in a dry condition to produce fibers; mixing a treatment agent having elasticity with the fibers obtained in the defibrating to produce a mixture; depositing the mixture in air on a fabric to be a first layer having air permeability and elasticity to produce a web to be a second layer; and forming the laminated fabric and web by heating and pressurizing.

A fabric for clothes includes a first layer having air permeability and elasticity, and a second layer laminated on the first layer, and is formed by depositing a treatment agent having elasticity and fibers.

### BRIEF DESCRIPTION OF THE DRAWINGS

FIG. 1 is a schematic cross-sectional view illustrating a configuration of a fabric for clothes according to an embodiment.
FIG. 2 is an enlarged schematic view illustrating the state of fibers and a treatment agent in a second layer.
FIG. 3 is a schematic cross-sectional view illustrating another embodiment of the fabric for clothes.
FIG. 4 is a flowchart illustrating a method of manufacturing the fabric for clothes according to the embodiment.
FIG. 5 is a schematic view illustrating a configuration of a manufacturing apparatus for the fabric for clothes.
FIG. 6 is a table showing details and evaluation results of Examples and Comparative Examples.

### DESCRIPTION OF EMBODIMENTS

In the embodiments described below, a fabric for clothes having a multilayer structure and a method of manufacturing the fabric will be exemplified and described with reference to the drawings. In each of the following drawings, Z axis alone, or X, Y, and Z axes, which are coordinate axes perpendicular to one another, are given as necessary, a direction indicated by an arrow is defined as a positive (+) direction, and a direction opposite to the positive direction is defined as a negative (-) direction. The Z axis is a virtual axis along the vertical direction, and the +Z direction may be referred to as upward and the -Z direction may be referred to as downward. For convenience of illustration, a size of each member is different from an actual size.

### 1. Fabric for Clothes

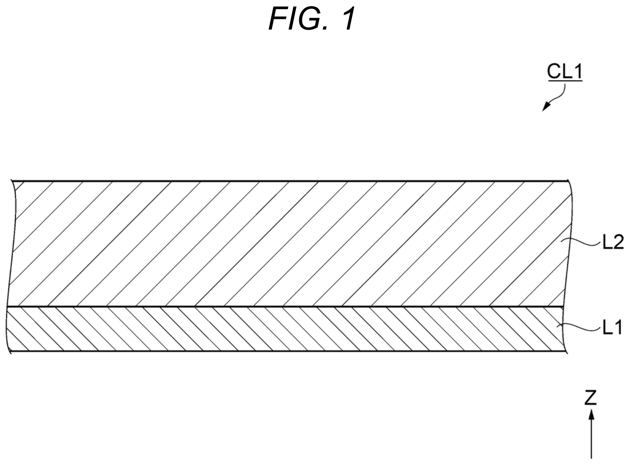

As illustrated in FIG. 1, a fabric for clothes CL1 according to the present embodiment has a multilayer structure including a first layer L1 and a second layer L2. The fabric for clothes CL1 is an example of the fabric for clothes of the present disclosure, and is manufactured by the method of manufacturing a fabric for clothes according to the present disclosure. Since the fabric for clothes CL1 has improved elasticity, the fabric for clothes CL1 is suitable for use as a fabric for, for example, sportswear and workwear.

In the fabric for clothes CL1, the first layer L1 and the second layer L2 are stacked in this order from bottom to top.

The thickness of the fabric for clothes CL1 is appropriately set according to the intended use and form of the clothes to apply. The thickness of the fabric for clothes CL1 is not particularly limited, but is, for example, 0.30 mm or more and 1.50 mm or less. This improves the flexibility and the mechanical strength of the fabric for clothes CL1. In addition, since the second layer L2 is stacked on the first layer L1, the mechanical strength of the fabric for clothes CL1 is ensured with a relatively small thickness of the first layer L1. In the present specification, the thickness refers to a dimension in a direction in which the first layer L1 and the second layer L2 are stacked, that is, in the direction along the Z axis.

The first layer L1 has air permeability. In the present specification, air permeability is defined as the amount of air passing through the test piece measured according to the JIS Air Permeability Test (JIS L1096:2010, 8.26.1, Method A). In the present specification, having air permeability means that the above air amount obtained by the above test method is 10 cm³/cm²·sec or more. The air permeability of the first layer L1 is derived from a fabric N1 described later, which is a material of the first layer L1.

Since the first layer L1 has air permeability, when the first layer L1 is used at the human body side on the inner side of the clothes, steamy clothes in wearing is suppressed, and the comfort is improved. Further, in the manufacture of the fabric for clothes CL1, the air permeability of the first layer L1 can be used to promote the deposition of fibers and the like on the first layer L1. Specifically, formation of a web containing fibers is promoted by suctioning air in which fibers and the like are dispersed through the first layer L1. The web forms the second layer L2. The method of manufacturing the fabric for clothes CL1 will be described later in the section "Method of Manufacturing Fabric for Clothes".

The first layer L1 has elasticity. In the present specification, elasticity is defined as the elongation percentage of the test piece measured according to the JIS Testing Methods for Woven and Knitted Fabrics (JIS L1096:2010, 8.14.1, Method A). In the present specification, having elasticity means that the elongation percentage is 10% or more. The elongation percentage of the first layer L1 is preferably 10% or more. This further improves the elasticity of the fabric for clothes CL1. The elasticity of the first layer L1 is derived from the fabric N1 which is the material of the first layer L1.

The first layer L1 made of the fabric N1 preferably contains one or more of polyester (PE), polyurethane (PU), and polymethylene terephthalate (PTT). Specifically, the first layer L1 is preferably a woven fabric, a knitted fabric, or a nonwoven fabric containing fibers made of at least one of PU and PTT. According to this, the elasticity of the first layer L1 is further improved. The first layer L1 is not limited to being made of PU or PTT, and may include other fibers or may be made of other fibers.

The fabric N1 may have anisotropic elasticity. In the present specification, the term "anisotropic elasticity" means that the elongation percentage differs depending on the direction in which the fabric is stretched, in other words, that a difference in elongation percentage results depending on the direction in which the fabric is stretched. Although not particularly limited, the difference in elongation percentage is, for example, about 10%. According to this, it is possible to define the direction used when the clothes are processed, and to selectively improve the elasticity according to the part of the clothes.

The anisotropic elasticity may be imparted to the fabric N1 by a weaving method or a knitting method. For example, when a plain-woven fabric is used as the fabric N1, anisotropic elasticity may be imparted by changing the elongation percentages of the warp and the weft yarns.

The thickness of the first layer L1 is not particularly limited, but is preferably, for example, 0.01 mm or more and 0.20 mm or less. This improves the flexibility and the mechanical strength of the fabric for clothes CL1.

The first layer L1 and the second layer L2 are bonded to each other by the binding action of a treatment agent serving as a material of the second layer L2. The first layer L1 may have an adhesive layer at the interface with the second layer L2, and the adhesive layer may adhere to the second layer L2.

The first layer L1 may be colored. When an unspecified material is reused for the second layer L2, the color tones of the first layer L1 and the second layer L2 may be significantly different. In this case, when the fabric for clothes CL1 is processed into clothes, a difference in color tones between the first layer L1 and the second layer L2 is noticeable. When the first layer L1 is colored, the difference in color tone can be reduced. When the first layer L1 is used on the outer side of the clothes, the design of the clothes is improved by coloring the first layer L1.

A known method such as digital printing including an inkjet method or analog printing can be applied to the coloring of the first layer L1. The coloring of the first layer L1 may be performed at the stage of the fabric N1 to be the first layer L1 in advance, or may be performed in the manufacturing process of the fabric for clothes CL1.

The second layer L2 is a nonwoven fabric, and includes a plurality of fibers obtained by defibrating a fabric or the like and a treatment agent. The second layer L2 is laminated on the first layer L1, and is formed by depositing the treatment agent and the plurality of fibers in the air. In the following description, the plurality of defibrated fibers may be simply referred to as fibers. Although the details will be described later, the defibrating step of defibrating to obtain fibers is performed in a dry condition. In the present specification, the dry condition refers to a treatment performed not in a liquid such as water but in air such as an atmosphere.

The fibers are among the main components of the second layer L2 and affect the physical properties such as the mechanical strength of the second layer L2 together with the treatment agent. From the viewpoint of resource circulation, it is preferable to use fabric obtained by defibrating offcuts, old clothes or the like. Examples of the type of the fabric include a knitted fabric, a plain-woven fabric, and a pile fabric. The fabric may include a nonwoven fabric.

When unspecified materials such as offcuts and old clothes are used as the material of the fibers, fibers of various materials may be mixed in the second layer L2. The elasticity of the second layer L2 to be formed may change depending on the material and the form of the fibers. In the related art, it has been difficult to adjust the elasticity in the second layer L2. In contrast, in the fabric for clothes CL1, since the second layer L2 contains the treatment agent having elasticity, the elasticity of the second layer L2 is ensured.

Examples of the fibers include fiber materials derived from natural products such as cotton, hemp, wool, silk, and regenerated cellulose, and synthetic fibers such as polypropylene, polyester, and polyurethane.

One of these fibers is used alone, or two or more of these fibers are used in combination. In particular, among the above fiber materials, the fabric preferably contains cotton or wool from the viewpoint of availability of old clothes and the like and physical properties of fibers.

The weighted average fiber length of the defibrated fibers is preferably 0.5 mm or more and 2.0 mm or less. According to the configuration, since the fibers are not excessively shortened, the fibers are appropriately entangled with each other, and the mechanical strength of the second layer L2 is improved. The weighted average fiber length is determined by a method according to ISO 16065-2:2007.

The fibers of the second layer L2 are preferably white fibers in consideration of reusing the clothes processed from the fabric for clothes CL1. The fibers are not limited to white fibers, and may include fibers dyed with a dye in advance. Further, the second layer L2 preferably contains no coloring material such as a pigment. The phrase "contains no coloring material" means "contains no coloring material intentionally added". The second layer L2 may contain a coloring material such as pigment particles unintentionally mixed.

The basis weight of the second layer L2 is preferably 100 g/m² or more and 180 g/m² or less. When the basis weight of the second layer is 100 g/m² or more, the basis weight of the fabric for clothes CL1 increases, further improving its elasticity. Further, in the fabric for clothes CL1, the tensile strength is improved, and the surface state when subjected to tension is improved. When the basis weight of the second layer is 180 g/m² or less, the flexibility and suppleness of the fabric for clothes CL1 are ensured.

When the basis weight of the second layer L2 is within the above range, the balance between the thinness and the mechanical strength is good in the second layer L2. The basis weight of the second layer L2 is adjusted by the deposition amount of the web formed in a depositing step in the manufacture of the fabric for clothes CL1, that is, the thickness of the web. The basis weight is the number of grams per square meter of the area of the surface along the XY plane in one fabric.

The thickness of the second layer L2 is not particularly limited, but is preferably, for example, 0.20 mm or more and 0.80 mm or less. This improves the flexibility and the mechanical strength of the fabric for clothes CL1. The thickness of the second layer L2 is adjusted not only by the thickness of the web described above, but also the pressing conditions of the web and the like in the forming step in the manufacture of the fabric for clothes CL1.

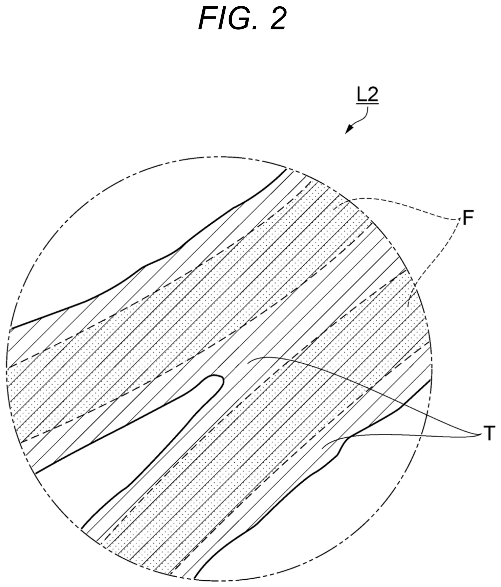

As illustrated in FIG. 2, in the second layer L2, a treatment agent T covers fibers F and bonds the fibers F to each other. Specifically, the treatment agent T imparts elasticity to the second layer L2. The treatment agent T has a binding action and bonds the fibers F to each other in the second layer L2. The treatment agent T is not limited to covering the entire surface of the fibers F, and may cover a part of the fibers F. The treatment agent T may be contained in the second layer L2 in a state of being interposed between the fibers F without covering the fibers F.

A resin having elasticity is applied as the treatment agent T. Examples of the above resin include thermoplastic resins such as polyurethane and silicone, and thermosetting resins. One of these treatment agent T is used alone, or two or more of these treatment agent T are used in combination.

The second layer L2 may contain other resins in addition to the treatment agent T. Examples of the other resin include not only a thermoplastic synthetic resin such as polyester, but also a natural resin such as shellac, pine resin, dammar resin, polylactic acid, plant-derived polybutylene succinate, plant-derived polyethylene, and PHBH (registered trademark) (Poly (3-hydroxybutyrate-co-3-hydroxyhexanoate)) manufactured by Kaneka Corporation. The above resin bonds the fibers F to each other in the same manner as the treatment agent T.

The second layer L2 may contain an additive. Examples of the additive include a flame retardant, an antioxidant, an ultraviolet absorber, an aggregation inhibitor, an antibacterial agent, an antifungal agent, a wax, a release agent, and the like.

The surface of the second layer L2 facing downward in contact with the first layer L1 or the surface facing upward may be subjected to pretreatment such as surface treatment. The surface treatment improves various physical properties such as abrasion resistance. The surface treatment may be performed in the manufacturing process of the fabric for clothes CL1, or may be separately performed after the fabric for clothes CL1 is manufactured.

The surface treatment is not particularly limited, and examples thereof include softening treatment, water repellent treatment, wrinkle prevention treatment, and abrasion resistance treatment. Known chemicals and the like can be applied to these surface treatments.

The fabric for clothes of the present disclosure is not limited to the fabric for clothes CL1 having the two-layer structure described above. The fabric for clothes of the present disclosure may have the form of a fabric for clothes CL2 having a three-layer structure as described below.

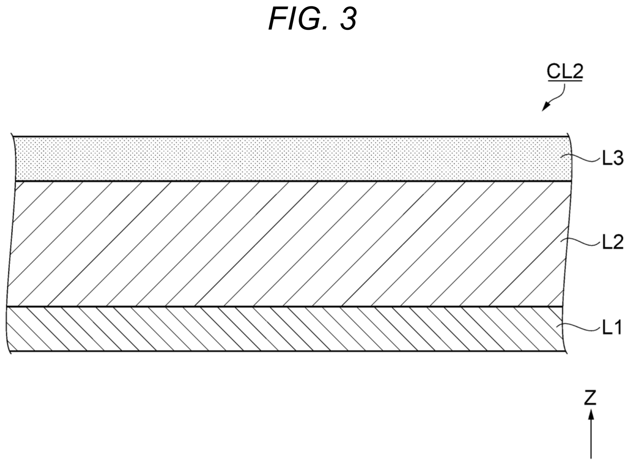

As illustrated in FIG. 3, the fabric for clothes CL2 has a multilayer structure including the first layer L1, the second layer L2, and a third layer L3. The fabric for clothes CL2 is an example of the fabric for clothes of the present disclosure, and is manufactured by the method of manufacturing a fabric for clothes according to the present disclosure. Since the fabric for clothes CL2 has also improved elasticity, the fabric for clothes CL2 is suitable for use as a fabric for, for example, sportswear and workwear.

The fabric for clothes CL2 is different from the above fabric for clothes CL1 in that the third layer L3 is attached to the upper surface of the second layer L2. Therefore, the same components as the components of the fabric for clothes CL1 are denoted by the same reference numerals and signs and redundant explanation of the components is omitted.

In the fabric for clothes CL2, the first layer L1, the second layer L2 and the third layer L3 are stacked in this order from bottom to top. When the fabric for clothes CL2 is processed into clothes, one of the first layer L1 and the third layer L3 is used outside the clothes.

The third layer L3 preferably has air permeability and elasticity. A textile fabric having elasticity may be applied as the material of the third layer L3 to improve the elasticity of the fabric for clothes CL2. In particular, when the elasticity of the textile fabric to be the third layer L3 is lower than the elasticity of the fabric N1 to be the first layer L1 and the third layer L3 is used outside the clothes, the surface condition when the clothes are subjected to tension becomes favorable, and the appearance when stretched is improved. The air permeability and the elasticity of the third layer L3 are derived from a textile fabric N3 described later, which is a material of the third layer L3.

The third layer L3, which is the textile fabric N3, preferably contains one or more of polyester, polyurethane, and polymethylene terephthalate. Specifically, the third layer L3 is preferably a woven fabric, a knitted fabric, or a nonwoven fabric containing fibers F made of at least one of PE, PU, and PTT. The third layer L3 is not limited to being made of the fibers F described above, and may contain other fibers F or may be made of other fibers F.

The thickness of the third layer L3 is not particularly limited, but is preferably, for example, 0.01 mm or more and 0.20 mm or less. This improves the flexibility and the mechanical strength of the fabric for clothes CL2.

The third layer L3 and the second layer L2 are bonded to each other by the binding action of the treatment agent T serving as a material of the second layer L2. The third layer L3 may have an adhesive layer at the interface with the second layer L2, and the adhesive layer may adhere to the second layer L2.

The third layer L3 may be colored in the same manner as the first layer L1 of the above fabric for clothes CL1. Similarly to the first layer L1, the third layer L3 may have anisotropic elasticity.

### 2. Method of Manufacturing Fabric for Clothes

The method of manufacturing the fabric for clothes of the present disclosure exemplifies the method of manufacturing the fabric for clothes CL2. The method of manufacturing the fabric for clothes CL2 is an example, and is not limited to the following configuration and order. The method of manufacturing the fabric for clothes CL2 is also applicable to the manufacture of the fabrics for clothes CL1.

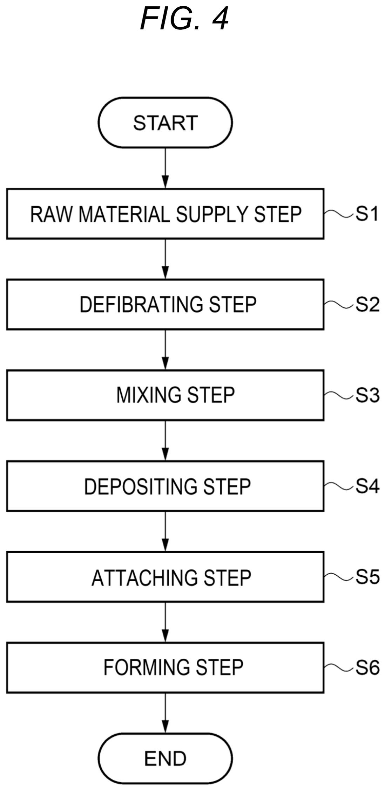

As illustrated in FIG. 4, the method of manufacturing the fabric for clothes CL2 according to the present embodiment includes a raw material supply step S1, a defibrating step S2, a mixing step S3, a depositing step S4, an attaching step S5, and a forming step S6. In the manufacturing process of the fabric for clothes CL2, the fabric for clothes CL2 is manufactured through the respective steps in the above order from the upstream raw material supply step S1 to the downstream forming step S6.

A specific example of the method of manufacturing the fabric for clothes CL2 will be described together with a manufacturing apparatus 1 for manufacturing the fabric for clothes CL2. The manufacturing apparatus 1 described below is an example, and is not limited to the following configuration. In the manufacturing apparatus 1, the end in the transport direction of the raw material, the fabric N1, the web, the product-in-process, and the like may be referred to as downstream, and the opposite side to the transport direction may be referred to as upstream.

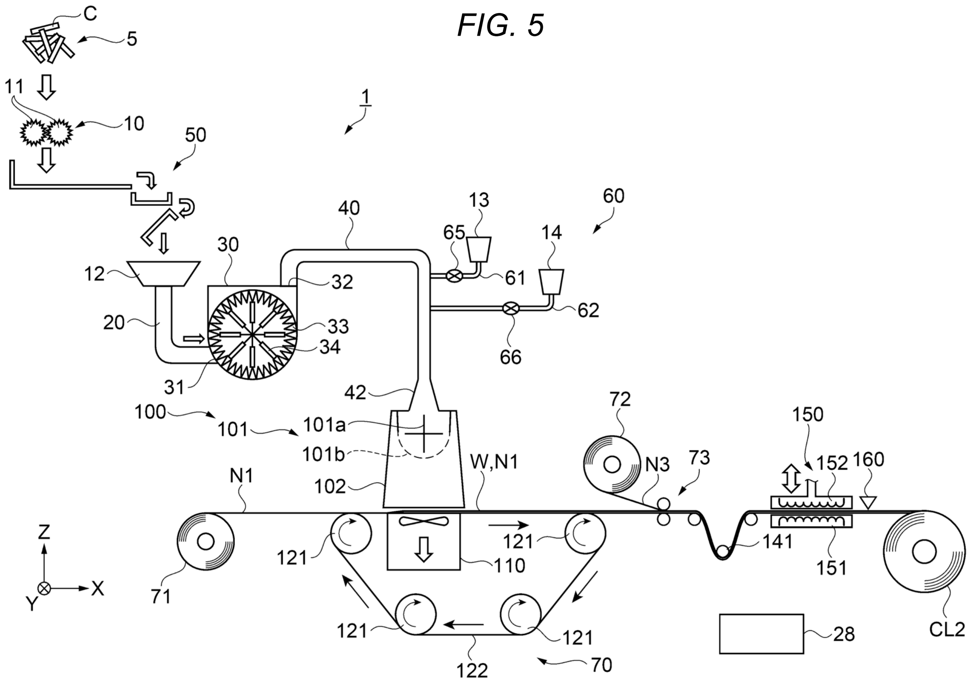

As illustrated in FIG. 5, the manufacturing apparatus 1 includes a supply unit 5, a crushing unit 10, a defibrating unit 30, a mixing unit 60, a depositing unit 100, a web transport unit 70, an attaching unit 73, a forming unit 150, a cutting unit 160, and the like from upstream to downstream. The manufacturing apparatus 1 also includes a control unit 28 that integrally controls the operation of each of the above configurations.

The raw material supply step S1 is performed by the supply unit 5. The supply unit 5 supplies a raw material C to the crushing unit 10. The supply unit 5 includes, for example, an automatic feeding mechanism (not illustrated), and continuously and automatically feeds the raw material C into the crushing unit 10. The raw material C is a fabric derived from offcuts or old clothes.

The crushing unit 10 shreds the raw material C supplied from the supply unit 5 into small pieces in air or the like. The crushing unit 10 is a shredder, a cutter mill, or the like having crushing blades 11. The raw material C is shredded by the crushing blades 11 into small pieces of the raw material C. The planar shape of the small piece is, for example, a several-millimeter-square shape or an irregular shape. The small pieces are collected in a fixed quantity feed unit 50. The raw material C may be shredded in advance before being fed into the supply unit 5.

The fixed quantity feed unit 50 measures the small pieces of the raw material C and feeds a fixed quantity to a hopper 12. The fixed quantity feed unit 50 is, for example, a vibration feeder. The small pieces of the raw material C fed to the hopper 12 are transported within a pipe 20 and reach an introduction port 31 of the defibrating unit 30. Then, the process proceeds to the defibrating step S2.

The defibrating step S2 is performed in the defibrating unit 30. The defibrating unit 30 defibrates the small pieces of the raw material C as the fabric in a dry condition to produce and extract the above fibers F contained in the raw material C. The defibrating unit 30 includes the introduction port 31, an ejection port 32, a stator 33, a rotor 34, and an airflow generation mechanism (not illustrated). The small pieces of the raw material C are introduced into the defibrating unit 30 via the introduction port 31 by the airflow of the airflow generation mechanism.

The stator 33 and the rotor 34 are disposed inside the defibrating unit 30. The stator 33 has a substantially cylindrical inner surface. The rotor 34 rotates along the inner surface of the stator 33. The small pieces of the raw material C are sandwiched between the stator 33 and the rotor 34 and are defibrated by a shearing force generated therebetween.

The fibers F produced by the defibrating unit 30 are ejected from the ejection port 32 into a pipe 40. The pipe 40 communicates with the inside of the defibrating unit 30 and the inside of the depositing unit 100. The fibers F are transported from the defibrating unit 30 to the depositing unit 100 by the airflow generated by the airflow generating mechanism. The mixing unit 60 is provided in the pipe 40 between the defibrating unit 30 and the depositing unit 100.

Although not illustrated, the manufacturing apparatus 1 may include a sorting mechanism that removes impurities and the like contained in the defibrated fibers F between the defibrating unit 30 and the mixing unit 60. Examples of the sorting mechanism include known devices such as a sieve. According to the sorting mechanism, the content of impurities is reduced, and fibers F having high purity can be used for the second layer L2. Then, the process proceeds to the mixing step S3.

The mixing step S3 is performed in the mixing unit 60. The mixing unit 60 mixes the fibers F obtained in the defibrating step S2 with the treatment agent T described above and the like, thereby producing a mixture. The mixing unit 60 includes hoppers 13, 14, supply pipes 61, 62, and valves 65, 66. In the mixing unit 60, the fibers F, the treatment agent T, and the like are mixed in the air to form a mixture. The mixture preferably contains no coloring material. The phrase "contains no coloring material" means that a coloring material such as a pigment is not intentionally added to the mixture. That is, the mixture may contain a coloring material such as a dye permeating the fibers F or a coloring material unintentionally mixed.

The hopper 13 communicates with the inside of the pipe 40 via the supply pipe 61. In the supply pipe 61, the valve 65 is provided between the hopper 13 and the pipe 40. The hopper 13 supplies the treatment agent T into the pipe 40. The valve 65 adjusts the mass of the treatment agent T supplied from the hopper 13 to the pipe 40. Thus, the mixing ratio between the fibers F and the treatment agent T is adjusted.

In the mixing step S3, a liquid containing the treatment agent T is preferably mixed with the fibers F to form a mixture. Examples of the liquid containing the treatment agent T include a solution obtained by dissolving the treatment agent T in a solvent, a dispersion obtained by dispersing the treatment agent T in a dispersion medium, and a liquid form obtained by melting the treatment agent T. According to this, since the liquid containing the treatment agent T wets and spreads on the surface of the fibers F, the elasticity of the treatment agent T is easily exhibited in the second layer L2. Therefore, in the fabric for clothes CL2, the elasticity, tensile strength, and the surface state when subjected to tension are improved. The treatment agent T may be mixed with the fibers F in the form of powder, particles, fibers, or the like.

The hopper 14 communicates with the inside of the pipe 40 via the supply pipe 62. In the supply pipe 62, the valve 66 is provided between the hopper 14 and the pipe 40. The hopper 14 supplies a resin and an additive other than the treatment agent T into the pipe 40. The valve 66 adjusts the mass of the resin and the additive other than the treatment agent T supplied from the hopper 14 to the pipe 40. Thus, the mixing ratio of the additive to the fibers F and the treatment agent T is adjusted. Note that the resin or the additive other than the treatment agent T may be mixed with the treatment agent T in advance and supplied from the hopper 13. When the resin or the additive other than the treatment agent T is not added to the mixture, the hopper 14, the supply pipe 62, and the valve 66 may be omitted.

The content of the fibers F in the second layer L2 is adjusted by the mixing ratio between the fibers F and other components including the treatment agent T in the mixing step S3. Specifically, in a web W, the mass ratio of the fibers F to the other components is in the range of 9:1 to 5:5 in terms of the fiber F to the other components. Although not particularly limited, in the present embodiment, in order to improve the mechanical strength of the second layer L2, the content of the fibers F in the web W is 65 mass% or more and 85 mass% or less.

When the characteristics of the fabric used for the raw material C, such as offcuts and old clothes, are clear, it is preferable to change the type of treatment agent T according to the material or weaving method of the fabric. This makes it possible to adjust physical properties including elasticity and tensile strength in the fabric for clothes CL2.

The fibers F and other components including the treatment agent T are mixed while being transported through the pipe 40 to the depositing unit 100 to form a mixture. In order to promote the mixing in the pipe 40 and improve the transportability of the mixture, a blower or the like that generates an air flow may be disposed in the pipe 40. The mixture is introduced from the pipe 40 into the depositing unit 100 via a coupling portion 42. Then, the process proceeds to the depositing step S4.

The depositing step S4 is performed in the depositing unit 100. The depositing unit 100 deposits the mixture on the fabric N1 having air permeability and elasticity in the air to produce the web W to be the second layer L2. The fabric N1 forms the first layer L1 of the fabric for clothes CL1. That is, the web W is formed by depositing a mixture containing the defibrated fibers F , the treatment agent T and the like on the fabric N1 to be the first layer L1 in the air. This makes it easy to form the web W and change the basis weight.

The depositing unit 100 includes a drum unit 101, a housing unit 102 that houses the drum unit 101, and a fabric supply unit 71 that supplies the fabric N1. The depositing unit 100 takes the mixture into the drum unit 101 from the pipe 40. Then, the mixture is deposited in a dry condition on the fabric N1 supplied from the fabric supply unit 71.

The web transport unit 70 including a mesh belt 122 and a suction mechanism 110 is disposed below the depositing unit 100. The suction mechanism 110 is disposed to face the drum unit 101 with the mesh belt 122 in between in the direction along the Z axis.

The drum unit 101 includes a blade member 101a rotationally driven by a motor (not illustrated), and a substantially cylindrical sieve portion 101b disposed to mainly cover the lower side of the blade member 101a. The blade member 101a loosens the entangled fibers F while rotating. The sieve portion 101b allows the fibers F, the treatment agent T, and the like smaller than the size of the mesh of the sieve to pass from the inside to the outside. As a result, in the mixture, the fibers F entangled in the drum unit 101 are loosened and dispersed in the air in the housing unit 102.

The fabric supply unit 71 continuously feeds the rolled fabric N1 onto the mesh belt 122. When the fabric N1 having an adhesive layer is used, the adhesive layer of the fabric N1 faces upward. Accordingly, the adhesive layer and the web W come into contact with each other. The elongation percentage of the fabric N1 to be the first layer L1 is 10% or more.

When the characteristics of the fabric used for the raw material C, such as offcuts and old clothes, are clear, it is preferable to change the material of the fabric N1 according to the material or weaving method of the fabric. This makes it possible to adjust physical properties including elasticity and tensile strength in the fabric for clothes CL2.

The mixture containing the fibers F is dispersed from the inside of the sieve portion 101b into the air in the housing unit 102. Then, the mixture containing the fibers F is randomly deposited above the fabric N1 being transported on the mesh belt 122. Therefore, the fibers F are less likely to be oriented in a specific direction in the web W.

The sieve portion 101b may not have a function of sorting large fibers F and the like in the mixture. That is, the drum unit 101 may loosen the fibers F of the mixture and release the entire mixture into the housing unit 102. The mixture dispersed in the air in the housing unit 102 is deposited on the upper surface of the fabric N1 by gravity and the suction force of the suction mechanism 110.

The basis weight of the fabric for clothes CL2 is adjusted by the basis weights of the fabric N1, the textile fabric N3 described later, and the web W. In particular, the basis weight of the second layer L2 is adjusted by changing the weight per unit area, which is the basis weight of the web W.

The basis weight of the second layer L2 can be changed by adjusting the amount of the mixture deposited on the fabric N1. Specifically, the amount of the above mixture is adjusted by the number of rotations of the blade member 101a, the supply amount per unit time of the mixture to the depositing unit 100, the transport speed of the fabric N1 by the mesh belt 122, and the like in the depositing step S4. The basis weight of the second layer L2 is preferably 100 g/m² or more and 180 g/m² or less as described above.

In order to increase the basis weight of the second layer L2, the mixture may be deposited while stretching the fabric N1 in the depositing step S4. Specifically, in the fabric N1, tension is applied to a region immediately below the housing unit 102 to stretch the fabric N1. By eliminating the tension after the mixture is deposited in this state, the basis weight of the web W increases. As a result, the basis weight of the second layer L2 increases, and the elasticity of the fabric for clothes CL2 is further improved. Further, in the fabric for clothes CL2, the tensile strength is increased, and the appearance when subjected to tension is improved.

The web transport unit 70 includes the mesh belt 122 and the suction mechanism 110. The web transport unit 70 promotes the deposition of the mixture on the fabric N1 by the suction mechanism 110. Further, the web transport unit 70 transports the web W formed of the mixture downstream by the rotation of the mesh belt 122.

The suction mechanism 110 is disposed below the drum unit 101. The suction mechanism 110 suctions the air in the housing unit 102 through a plurality of holes of the mesh belt 122 and the fabric N1 having air permeability. Accordingly, the mixture released to the outside of the drum unit 101 is suctioned downward together with the air and deposited on the upper surface of the fabric N1. A known suction device such as a blower is adopted as the suction mechanism 110.

Air passes through the plurality of holes of the mesh belt 122, but the fibers F, the treatment agent T, and the like contained in the mixture are difficult to pass the holes. The mesh belt 122 is an endless belt and is looped with tension by four tension rollers 121.

The upper surface of the mesh belt 122 moves downstream by the rotation of the tension rollers 121 themselves. In other words, the mesh belt 122 rotates clockwise in FIG. 4. When the mesh belt 122 is rotated by the tension rollers 121, the mixture is continuously deposited on the fabric N1 to form the web W. The web W contains a relatively large amount of air and is soft and puffed. The web W is transported downstream together with the fabric N1 as the mesh belt 122 moves. Then, the process proceeds to the attaching step S5.

Here, a humidifier may be disposed downstream of the depositing unit 100 to spray water onto the web W for humidification. As a result, scattering of the fibers F, the treatment agent T, and the like contained in the web W is suppressed. Further, the water used for humidification may contain a water-soluble agent, and the web W to be the second layer L2 may be subjected to a surface treatment and the like in parallel with the humidification.

The attaching step S5 is performed in the attaching unit 73. After the depositing step S4 and before the forming step S6, the textile fabric N3 to be the third layer L3 is attached to the upper surface of the web W. As described above, the elasticity of the textile fabric N3 is preferably lower than the elasticity of the fabric N1.

The textile fabric N3 is supplied from a fabric supply unit 72 to the attaching unit 73. The fabric supply unit 72 continuously feeds the rolled textile fabric N3 above the web W. When the textile fabric N3 having an adhesive layer is used, the adhesive layer is brought into contact with the upper surface of the web W.

The attaching unit 73 bonds the upper surface of the web W to the lower surface of the textile fabric N3. The attaching unit 73 is a pressure roller pair, and presses the fabric N1, the web W, and the textile fabric N3 while sandwiching the fabric N1, the web W, and the textile fabric N3 in the up-down direction. When the fabric for clothes CL1 is manufactured by the manufacturing apparatus 1, the attaching unit 73 and the attaching step S5 are omitted. Then, the process proceeds to the forming step S6.

A dancer roller 141 is disposed between the attaching step S5 and the forming step S6. The dancer roller 141 ensures the processing time of the downstream forming step S6. Specifically, the forming step S6 is is batch processing. Therefore, the processing time of the forming step S6 is ensured by moving the dancer roller 141 up and down with respect to the fabric N1, the web W, and the textile fabric N3 which are continuously transported. The fabric N1, the web W, and the textile fabric N3 are transported downstream via the dancer roller 141.

The forming step S6 is performed in the forming unit 150. In the forming unit 150, the fabric N1, the web W, and the textile fabric N3 are laminated and formed by heating and pressurizing. When the fabric for clothes CL1 is manufactured, the fabric N1 and the web W are laminated and formed by heating and pressurizing.

The forming unit 150 is a hot press device and includes an upper plate 152 and a lower plate 151. The upper plate 152 and the lower plate 151 sandwich the fabric N1, the web W, and the textile fabric N3 therebetween and pressurize them, and heat them by a built-in heater. In the forming step S6, the forming step S6 may be continuously performed using a heating roller pair or the like. When the heating roller pair is used, the dancer roller 141 may be omitted.

The web W is compressed in the up-down direction via the fabric N1 and the textile fabric N3 by pressurization, and its density increases. Then, the treatment agent T is melted by heating and wets and spreads between the fibers F. When the heating is completed in this state and the treatment agent T is solidified, the fibers F are bonded to each other by the treatment agent T. The fabric N1 and the textile fabric N3 are bonded to the web W by the treatment agent T of the web W. As a result, the fabric N1 forms the first layer L1, the web W forms the second layer L2, and the textile fabric N3 forms the third layer L3.

The pressing conditions in the forming unit 150 are appropriately adjusted depending on a desired density and the like in the fabric for clothes CL2. For example, in the forming step S6, the pressing pressure is 0.01 MPa or more. The heating conditions in the forming unit 150 are appropriately adjusted depending on the type, melting point, curing temperature, and the like of the treatment agent T. For example, in the forming step S6, the heating temperature is 90°C or higher.

In the forming unit 150, a band-shaped fabric for clothes CL2 in which the fabric N1, the web W, and the textile fabric N3 are integrated is formed.

The cutting unit 160 is disposed downstream of the forming unit 150. The cutting unit 160 shapes the shape of the sides at both ends in the direction along the Y axis in the band-shaped fabric for clothes CL2. The cutting unit 160 includes a vertical blade (not illustrated). The vertical blade cuts the band-shaped fabric for clothes CL2 along the conveyance direction. Accordingly, both sides of the fabric for clothes CL2 are cut and aligned.

Then, the band-shaped fabric for clothes CL2 is wound into a roll to form a bolt of fabric. Through the manufacturing process described above, the fabric for clothes CL2 including the first layer L1, the second layer L2, and the third layer L3 is manufactured.

According to the present embodiment, the following effects can be obtained.

It is possible to improve the elasticity of the fabrics for clothes CL1, CL2 to be manufactured. Specifically, the elasticity of the second layer L2 is ensured by the treatment agent T. The elasticity of the fabrics for clothes CL1, CL2 is enhanced by the first layer L1. This makes it possible to manufacture the fabrics for clothes CL1, CL2 with improved elasticity even when an unspecified material such as offcuts or old clothes is reused. Therefore, it is possible to provide a method of manufacturing a fabric for clothes with improved elasticity.

It is possible to improve the elasticity of the fabrics for clothes CL1, CL2. Specifically, the elasticity of the second layer L2 is ensured by the treatment agent T. The elasticity of the fabrics for clothes CL1, CL2 is enhanced by the first layer L1. As a result, the elasticity can be improved even when an unspecified material such as offcuts or old clothes is reused. Therefore, it is possible to provide the fabrics for clothes CL1, CL2 with improved elasticity.

Contents derived from the embodiments are described below.

The method of manufacturing a fabric for clothes includes: a defibrating step of defibrating a fabric in a dry condition to produce fibers; a mixing step of mixing a treatment agent having elasticity with the fibers obtained in the defibrating to produce a mixture; a depositing step of depositing the mixture in air on a fabric to be a first layer having air permeability and elasticity to produce a web to be a second layer; and a forming step of forming the laminated fabric and web by heating and pressurizing.

According to this configuration, it is possible to improve the elasticity of the fabric for clothes to be manufactured. Specifically, the elasticity of the second layer is ensured by the treatment agent. The elasticity of the fabric for clothes is enhanced by the first layer. This makes it possible to manufacture the fabric for clothes with improved elasticity even when an unspecified material such as offcuts or old clothes is reused. Therefore, it is possible to provide a method of manufacturing a fabric for clothes with improved elasticity.

In the above method of manufacturing the fabric for clothes, the fabric has anisotropic elasticity.

According to this configuration, since the elasticity is anisotropic, the elasticity can be selectively improved according to the part of the clothes by defining the direction to be used.

In the above method of manufacturing the fabric for clothes, the mixture is deposited while stretching the fabric in the depositing step.

According to this configuration, since the mixture is deposited in a state where the fabric is stretched, the basis weight of the fabric for clothes increases, further improving its elasticity. Further, in the fabric for clothes, the tensile strength is increased, and the appearance when subjected to tension is improved.

In the above method of manufacturing the fabric for clothes, in the depositing step, the amount of the mixture deposited on the fabric is adjusted such that the basis weight of the second layer is 100 g/m² or more and 180 g/m² or less.

According to this configuration, when the basis weight of the second layer is 100 g/m² or more, the basis weight of the fabric for clothes increases, further improving its elasticity. Further, in the fabric for clothes, the tensile strength is increased, and the surface state when subjected to tension is improved. When the basis weight of the second layer is 180 g/m² or less, the flexibility and suppleness of the fabric for clothes are ensured.

In the above method of manufacturing the fabric for clothes, in the mixing step, a liquid containing the treatment agent is mixed with the fibers.

According to this configuration, since the treatment agent wets and spreads on the surface of the fiber, the elasticity of the treatment agent is easily exhibited in the second layer. Thus, in the fabric for clothes, the elasticity, the tensile strength, and the surface state when subjected to tension are improved.

In the above method of manufacturing the fabric for clothes, the fabric contains one or more of polyurethane and polymethylene terephthalate.

According to this configuration, since polyurethane and polymethylene terephthalate are relatively excellent in elasticity, the elasticity of the fabric for clothes is further improved.

The above method of manufacturing the fabric for clothes includes the attaching step of attaching a textile fabric having lower elasticity than the fabric and to be a third layer to the web, after the depositing step and before the forming step, and in the forming step, the fabric, the web, and the textile fabric are laminated and formed by heating and pressurizing.

According to this configuration, the tensile strength and the surface state when subjected to tension are improved in the fabric for clothes by the third layer.

In the above method of manufacturing the fabric for clothes, the type of the treatment agent or the material of the fabric is changed according to the material or the weaving method of the fabric.

According to this configuration, it is possible to adjust physical properties including elasticity and tensile strength in the fabric for clothes.

The fabric for clothes includes the first layer having air permeability and elasticity, and the second layer laminated on the first layer, and is formed by depositing a treatment agent having elasticity and fibers.

According to this configuration, the elasticity can be improved. Specifically, the elasticity of the second layer is ensured by the treatment agent. The elasticity of the fabric for clothes is enhanced by the first layer. As a result, the elasticity can be improved even when an unspecified material such as offcuts or old clothes is reused. Therefore, it is possible to provide a fabric for clothes with improved elasticity.

### 3. Examples and Comparative Examples

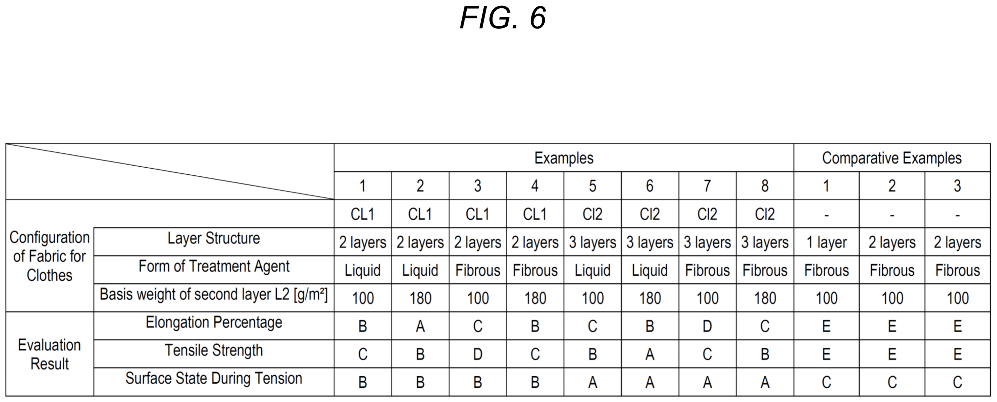

Hereinafter, the effects of the above embodiment will be described in more detail with reference to Examples and Comparative Examples. For Examples 1 to 8 and Comparative Examples 1 to 3, the configurations of the fabrics for clothes, the evaluation results, and the like are shown in FIG. 6. In the following description, Examples 1 to 8 may be simply collectively called Examples in some cases, and Comparative Examples 1 to 3 may also be simply called Comparative Examples in some cases. No aspect of the present disclosure is limited to these examples.

### 3.1. Preparation of Fabric for Clothes for Evaluation

As shown in FIG. 6, Examples 1 to 4 applied the fabric for clothes CL1 having the two-layer structure of the above embodiments. Examples 5 to 8 applied the fabric for clothes CL2 having the three-layer structure of the above embodiments.

In Example 1, a white cotton cloth was used as the raw material C serving as the raw material of the second layer L2. Specifically, in the raw material supply step S1, the fabric C was coarsely crushed into substantially rectangular small pieces with long sides of 1 mm to 30 mm using a cutter mill manufactured by Makino Mfg. Co., Ltd. Next, in the same manner as in the defibrating step S2 of the above embodiment, the above fine pieces were defibrated to obtain the fibers F.

Next, in the mixing step S3, the fibers F and the treatment agent T were mixed by air agitation at a mass ratio of 7:3 to produce a mixture. Boncoat (registered trademark) 4001 (acrylic resin emulsion) manufactured by DIC Corporation was applied as the treatment agent T.

Next, as the depositing step S4, the above mixture was deposited on the surface of the fabric N1 in the air to form the web W. At this time, the deposition amount of the mixture was adjusted so that the basis weight of the second layer L2 was 100 g/m². As the fabric N1, KKF5200-58 75d High Tension Knit, a 75d high-tension wide-width knit having an elongation percentage of 120% manufactured by Uni Textile Co., Ltd., was used. The above elongation percentage is a numerical value measured by the method described above.

Next, the attaching step S5 for forming a three-layer structure was omitted, and the forming step S6 was performed. In the forming step S6, the web W and the fabric N1 were subjected to a heating press. At this time, as a heating press, AF-54TEN (trade name) manufactured by ITSUMI Co., Ltd. was used, with heating conditions set to 150°C for 1 minute, and pressing conditions adjusted so that the thickness of the second layer L2 was 0.31 mm. Thereafter, a single sheet having a length of 300 mm and a width of 50 mm was cut with a cutter to prepare a test piece of the fabric for clothes CL1 of Example 1.

In Example 2, a test piece of the fabric for clothes CL1 of Example 2 was prepared in the same manner as in Example 1, except that the basis weight of the second layer L2 was 180 g/m².

In Example 3, the treatment agent T was mixed with the fiber F in fibrous solid form, rather than as a liquid. A test piece of the fabric for clothes CL1 of Example 3 was prepared in the same manner as in Example 1, except as noted above.

In Example 4, a test piece of the fabric for clothes CL1 of Example 4 was prepared in the same manner as in Example 3, except that the basis weight of the second layer L2 was 180 g/m².

In Example 5, the steps up to the depositing step S4 were performed in the same manner as in Example 1. Next, the attaching step S5 was performed. Specifically, as the textile fabric N3, 41255 40d nylon coating stretch manufactured by SUNWELL co.,LTD having an elongation percentage of 130% was used. The above elongation percentage is a numerical value measured by the method described above. Thereafter, the forming step S6 and the subsequent steps were performed in the same manner as in Example 1 to prepare a test piece of the fabric for clothes CL2 of Example 5.

In Example 6, a test piece of the fabric for clothes CL2 of Example 6 was prepared in the same manner as in Example 5, except that the basis weight of the second layer L2 was 180 g/m².

In Example 7, the treatment agent T was mixed with the fiber F in fibrous solid form, rather than as a liquid. A test piece of the fabric for clothes CL2 of Example 7 was prepared in the same manner as in Example 5, except as noted above.

In Example 8, a test piece of the fabric for clothes CL2 of Example 8 was prepared in the same manner as in Example 7, except that the basis weight of the second layer L2 was 180 g/m².

In Comparative Example 1, a fabric for clothes was prepared using only the second layer L2 made of the web W without using the fabric N1 to be the first layer L1. Other conditions were performed in the same manner as in Example 1 to prepare a test piece of the fabric for clothes of Comparative Example 1.

In Comparative Example 2, a two-layer structure similar to that of the fabric for clothes CL1 of the above embodiment was applied. However, in Comparative Example 2, a fabric having no elasticity was applied to the first layer L1. Specifically, as the above fabric, KKF3800-58 New-Venus Suede, a wide-width knit having an elongation percentage of 3% manufactured by Uni Textile Co., Ltd., was used. The elongation percentage of the fabric is a numerical value measured by the method described above. A test piece of the fabric for clothes of Comparative Example 2 was prepared in the same manner as in Comparative Example 1, except as noted above.

In Comparative Example 3, a two-layer structure similar to that of the fabric for clothes CL1 of the above embodiment was applied. However, in Comparative Example 3, a commercially available fibrous urethane resin was applied without using the treatment agent T having elasticity. A test piece of the fabric for clothes of Comparative Example 3 was prepared in the same manner as in Example 3, except as noted above.

### 3.2. Evaluation of Test Piece

The elongation percentage, the tensile strength, and the surface state during the tensile test were evaluated for each test piece of Examples and Comparative Examples.

### 3.2.1. Elongation Percentage

As an index of elasticity, the elongation percentage of the test pieces were measured according to the JIS Testing Methods for Woven and Knitted Fabrics (JIS L1096:2010, 8.14.1, Method A) described above. The obtained elongation percentage was evaluated according to the following evaluation criteria and shown in FIG. 6.

### Evaluation Criteria

A: The elongation percentage is 25% or more.
B: The elongation percentage is 20% or more and less than 25%.
C: The elongation percentage is 15% or more and less than 20%.
D: The elongation percentage is 10% or more and less than 15%.
E: The elongation percentage is less than 10%.

### 3.2.2. Tensile Strength

Similarly to the above elongation percentage, tensile strength was defined as the maximum value at fracture of the test pieces measured according to the JIS Testing Methods for Woven and Knitted Fabrics (JIS L1096:2010, 8.14.1, Method A). The obtained tensile strength was evaluated according to the following evaluation criteria and shown in FIG. 6.

### Evaluation Criteria

A: The tensile strength is 160 N or more.
B: Tensile strength is 140 N or more and less than 160 N.
C: Tensile strength is 120 N or more and less than 140 N.
D: Tensile strength is 100 N or more and less than 120 N.
E: Tensile strength is less than 100 N.

### 3.2.3. Surface State During Tension

At the time of measuring the above elongation percentage, the surface state of the test pieces at the time when the elongation percentage was about 10% was visually observed, and evaluated according to the following evaluation criteria and shown in FIG. 6. In the example, the observation surface was the surface of the first layer L1 when the structure was two-layered, and was the surface of the third layer L3 when the structure was three-layered. In the Comparative Examples, the surface states of the test pieces immediately before fracture were observed. The observation surface was a surface corresponding to the second layer L2 formed from the web W in Comparative Example 1, and was a surface corresponding to the first layer L1 of Example 1 in Comparative Examples 2 and 3.
A: The density is high and the appearance is dense.
B: The density is low and the appearance is rough.
C: The density is significantly low and the appearance is considerably rough.

### 3.3. Summary of Evaluation Results

As shown in FIG. 6, in the evaluation of the elongation percentage, all Examples were rated as D or higher, which corresponds to "acceptable". In particular, Examples 1,2,4, and 6 were rated as B or higher, indicating that the elasticity was improved. In the evaluation of the tensile strength, all Examples were rated as D or higher, which corresponds to "acceptable". In particular, Examples 2,5,6, and 8 were rated as B or higher, indicating that the tensile strength was improved. In the evaluation of the surface state during tension, all Examples were rated as B or higher, corresponding to "acceptable", indicating that the appearance in the stretched state was improved.

In Comparative Examples, all were rated E, corresponding to "unacceptable", in terms of elongation percentage and tensile strength, and were also rated C, corresponding to "unacceptable", in terms of the surface state during tension. Accordingly, it was found that, in the Comparative Examples, the elongation percentage, tensile strength, and the surface state when subjected to tension were difficult to improve.

## Claims

1. A method of manufacturing a fabric for clothes comprising:
defibrating a fabric in a dry condition to produce fibers;
mixing a treatment agent having elasticity with the fibers obtained in the defibrating to produce a mixture;
depositing the mixture in air on a fabric to be a first layer having air permeability and elasticity to produce a web to be a second layer; and
forming the laminated fabric and web by heating and pressurizing.

2. The method of manufacturing the fabric for clothes according to claim 1, wherein the fabric has anisotropic elasticity.

3. The method of manufacturing the fabric for clothes according to claim 1, wherein, in the depositing, the fabric is stretched while the mixture is deposited.

4. The method of manufacturing the fabric for clothes according to claim 1, in the depositing, the amount of the mixture deposited on the fabric is adjusted such that the basis weight of the second layer is 100 g/m² or more and 180 g/m² or less.

5. The method of manufacturing the fabric for clothes according to claim 1, wherein, in the mixing, a liquid containing the treatment agent is mixed with the fibers.

6. The method of manufacturing the fabric for clothes according to claim 1, wherein the fabric contains one or more of polyurethane and polymethylene terephthalate.

7. The method of manufacturing the fabric for clothes according to claim 1, comprising: attaching a textile fabric having lower elasticity than the fabric and to be a third layer to the web, after the depositing and before the forming, and in the forming, the fabric, the web, and the textile fabric are laminated and formed by heating and pressurizing.

8. The method of manufacturing the fabric for clothes according to claim 1, the type of the treatment agent or the material of the fabric is changed according to the material or the weaving method of the fabric.

9. A fabric for clothes, comprising: a first layer having air permeability and elasticity; and a second layer laminated on the first layer, and is formed by depositing a treatment agent having elasticity and fibers.
